# EUROPÄISCHE PATENTANMELDUNG

(11) **EP 2 982 264 A1**
(43) Veröffentlichungstag der Anmeldung: **10.02.2016**
(21) Anmeldenummer: 15180455.6
(22) Anmeldetag: 10.08.2015
(51) Int. Cl.: A45C 11/18

(54) **SCHUTZVORRICHTUNG FÜR EINE KARTE**

(30) Priorität: 08.08.2014 AT 505552014
(71) Anmelder: Veigl, Michael Friedhelm, 3314 Strengberg (AT)
(72) Erfinder: Veigl, Michael Friedhelm, 3314 Strengberg (AT)
(74) Vertreter: Jell, Friedrich

(57) **Zusammenfassung**

Die Erfindung betrifft eine Schutzvorrichtung (1) für eine Karte (2), insbesondere Chipkarte (3), mit einer Aufnahme (6) für die Karte (2), mit einer Hülle (7), die zwischen ihren Breit- (8) und Schmalseiten (9, 10) die Aufnahme (6) für die Karte (2) und an mindestens einer Schmalseite (9) eine Aufnahmeöffnung (12) für die Karte (2) aufweist, und mit mindestens zwei in die Hülle (7) an gegenüberliegenden Schmalseiten (10) eingebrachten Grifföffnungen (13) zum Greifen der Karte (2) der Aufnahme (6). Um die Karte beim Herausnehmen zuverlässig greifen zu können, wird vorgeschlagen, dass sich die beiden Grifföffnungen (13) entlang der Breitseite (8) direkt gegenüber liegen und die Schmalseiten (10) im Bereich der Grifföffnungen (13) vollständig ausgenommen sind.

## Beschreibung

Die Erfindung betrifft eine Schutzvorrichtung für eine Karte, insbesondere Chipkarte, mit einer Aufnahme für die Karte, mit einer Hülle, die zwischen ihren Breit- und Schmalseiten die Aufnahme für die Karte und an mindestens einer Schmalseite eine Aufnahmeöffnung für die Karte aufweist, und mit mindestens zwei in die Hülle an gegenüberliegenden Schmalseiten eingebrachten Grifföffnungen zum Greifen der Karte der Aufnahme.

Die DE 8435413U1 zeigt eine Schutzvorrichtung für Karten, wie zum Beispiel Scheck-, Kreditkarten oder dergleichen. Bei dieser Schutzvorrichtung sind aus Kunststoff bestehende Breitseiten entlang ihrer Längskanten - den zwei längeren Schmalseiten der Hülle - miteinander verbunden und auf geringem Abstand zueinander gehalten. Die Breitseiten bilden so zwischen sich eine Aufnahme für die Karte aus. Um die Karte in bzw. aus der Aufnahme zu entnehmen bildet zumindest eine der verbleibenden Schmalseiten eine Aufnahmeöffnung für die Karte. Zum Greifen der Karte, um diese aus der Aufnahme entnehmen, sind Grifföffnungen diagonal an den Ecken vorgesehen. Auch eine mittige und seitliche Öffnung wird vorgeschlagen. Dennoch hat sich das Greifen der Karte bei diesen Grifföffnungen als schwierig herausgestellt, insbesondere dann, wenn die Grifföffnungen bewusst klein gehalten werden, um den Schutz für die Karte zu maximieren.

Zudem zeigt die DE 202011107916U1 eine Schutzvorrichtung für mehrere Karten. Die Schutzvorrichtung weist eine flexible Hülle aus Silikon auf, die an beiden Breitseiten durch eine strahlungsschirmende Folie ergänzt wird. An deren Oberseite bildet die Hülle eine Aufnahmeöffnung aus, durch die die Karten ins Innere der Hülle eingebracht werden können. Die Aufnahmeöffnung erstreckt sich daher bereisweise auf die Schmalseiten der Hülle und kann zum Teil auch an den Breitseiten vorgesehen sein. Um Karten aus der Hülle zu entnehmen, muss die flexible Hülle jedoch an der Aufnahmeöffnung auseinander gebogen werden. Eine einfache, komfortable Entnahme der Karten ist dabei nicht möglich.

Der Erfindung liegt somit die Aufgabe zugrunde, ausgehend vom eingangs geschilderten Stand der Technik, eine Schutzvorrichtung dahin gehend zu verbessern, dass die Karte beim Herausnehmen zuverlässig gegriffen werden kann und dennoch von der Schutzvorrichtung optimal geschützt wird. Darüber hinaus soll diese Schutzvorrichtung in der Fertigung einfach hergestellt werden können und kostengünstig sein.

Die Erfindung löst die gestellte Aufgabe dadurch, dass sich die beiden Grifföffnungen entlang der Breitseite direkt gegenüber liegen und die Schmalseiten im Bereich der Grifföffnungen vollständig ausgenommen sind.

Liegen sich die beiden Grifföffnungen entlang der Breitseite direkt gegenüber, kann die Karte beidseitig für die Entnahme gegriffen werden. Aufgrund der direkt gegenüber liegenden Grifföffnungen kann dies mit den Fingern einer Hand erfolgen, welches eine bessere Kontrolle bei der Führung der Karte erlauben kann. Gegenüber dem Stand der Technik kann so bei der erfindungsgemäßen Schutzvorrichtung die Karte für die Entnahme zuverlässig gegriffen werden, wobei dennoch ein optimaler Schutz für die Karte bestehen kann. Zudem kann die Schutzvorrichtung aufgrund der einfachen Gestaltung und der damit verbundenen großen Auswahl verwendbarer Materialen in der Fertigung einfach herstellbar und dementsprechend kostengünstig sein. Die Schutzvorrichtung kann weiter verbessert werden, wenn die Schmalseiten im Bereich der Grifföffnungen vollständig ausgenommen sind. Dies kann das sichere Greifen der Karte an ihren gegenüberliegenden Kartenschmalseiten mit zwei Fingern erlauben. Das Drücken der Karte, um die notwendige Reibung zur Bewegung der Karte zu erreichen, kann so vermieden werden, da die Karte an ihren gegenüberliegenden Kartenschmalseiten gehalten wird. Das Greifen der Karte an ihren Kartenschmalseiten erlaubt zudem, dass die Breitseiten der Karte durch die Hülle beinahe vollständig abgedeckt werden können, was den Schutz für die Karte nochmals erhöhen kann.

Schließen die Grifföffnungen an die Aufnahmeöffnung an, kann die Karte im Bereich der Grifföffnungen gegriffen werden und auch während der Entnahme aus der Hülle kontinuierlich an der einmal gegriffenen Position gehalten werden. Einfaches Handling der Karte, auch während der Entnahme, kann eine derart gestaltete Schutzvorrichtung auszeichnen.

Konstruktive Vereinfachungen können sich ergeben, wenn sich die Aufnahmeöffnung in deren Öffnungslänge über die anschließenden Grifföffnungen auf die Länge der der Aufnahmeöffnung gegenüberliegenden Schmalseite erweitert. Außerdem können damit die Kartenschmalseiten sicher und leicht gegriffen werden.

Weist die Hülle eine, insbesondere vollflächige, elektromagnetische Abschirmung an beiden Breitseiten auf, kann eine mithilfe der Erfindung geschützte Chipkarte auch vor einer NFC bzw. RFID Abfrage sicher abgeschirmt werden, weil sich deren magnetische Wechselfelder bzw. hochfrequente Radiowellen nicht mit der Chipkarte koppeln können.

Dies kann weiter verbessert werden, wenn die Hülle eine in Kunststoff eingebettete elektromagnetische Abschirmung, insbesondere Weißblech, aufweist. Bei einer unterbrechungsfreien Weißblechschicht können magnetische Sättigungseffekte klein gehalten werden, sodass selbst vergleichsweise hohe magnetische Flussdichten statischer Magnetfelder zuverlässig abgeschirmt werden können. Die Schutzvorrichtung kann jedoch nicht nur eine äußerst sichere Abschirmung gegenüber elektrischen und/oder magnetischen Feldern gewährleisten, sie ist aufgrund einer Verwendung von Weißblech auch vergleichsweise kostengünstig in ihrer Herstellung. Zudem kann Weißblech gegenüber hoch permeablen Werkstoffen ein deutlich besseres Verhalten bei Erreichen der magnetischen Sättigung zeigen. So ist nämlich die Hysteresekurve für viele hoch permeable Werkstoffe im Bereich der Sättigung wesentlich flacher als die von Weißblech. Dadurch kann bei hoch permeablen Werkstoffen ab ihrer Sättigung so gut wie kein zusätzlicher magnetischer Fluss durch die Abschirmung erfolgen, wodurch die zu schützende Karte besonders stark gefährdet wäre. Bei Verwendung von Weißblech kann aufgrund der steileren Hysteresekurve zumindest ein Teil des zusätzlichen magnetischen Flusses über das Weißblech abgeleitet werden.

Bestehen die der Aufnahme zugewandten Flächen der Breitseiten der Hülle aus Hart-PVC, kann die Karte aufgrund der günstigen Gleiteigenschaften der Hart-PVC-Oberfläche ohne nennenswerten Widerstand in die Aufnahme eingeführt bzw. dementsprechend leicht aus der Aufnahme entnommen werden. Eine weitere Verbesserung der Handhabung der Schutzvorrichtung kann so erreicht werden.

Sind die Grifföffnungen schlitzförmig ausgebildet, kann die Grifföffnung besonders klein gehalten werden. Dies kann einen umfassenden Schutz für die Karte erlauben, da nur geringe Teile der Kartenoberfläche der in die Schutzvorrichtung eingesteckten Karte zugänglich sind.

Springen die Grifföffnungen gegenüber dem Verlauf der Schmalseite zur Mitte der Hülle hin um die Schlitztiefe zurück, so können die Grifföffnungen zum sicheren Greifen der Karte auf konstruktiv einfache Art und Weise geschaffen werden ohne dass Einbußen in die Schutzwirkung der Hülle in Kauf genommen werden müssen.

Voranstehendes kann weiter verbessert werden, wenn die Schlitztiefe der Grifföffnungen kleiner 1 mm (Millimeter) ist. Da so nur die Kartenschmalseiten der Karte im Bereich der Grifföffnung zugänglich sind, kann der Schutz der Karte besonders umfassend erfolgen. Insbesondere kann dadurch der elektromagnetische Schutz beinahe beide Breitseiten der Karte zur Gänze abdecken. So können selbst bei RFID Karten, bei denen die Antenne bis in den Randbereich ragt, sensible Daten zuverlässig geschützt werden.

Sind die beiden gegenüberliegenden Schmalseiten mit den Grifföffnungen zum Überstehen einer in der Aufnahme vorgesehenen Karte an der Schmalseite mit der Aufnahmeöffnung ausgebildet, kann trotz dem sicheren, seitlichen Greifen der Karte diese Karte maximal geschützt in Schutzvorrichtung bzw. Aufnahme vorgesehen werden.

In den Figuren ist beispielsweise der Erfindungsgegenstand anhand eines Ausführungsbeispiels näher dargestellt. Es zeigen
- Fig. 1: eine teilweise aufgerissene Draufsicht auf eine Schutzvorrichtung und
- Fig. 2: eine Schnittansicht der Schutzvorrichtung entsprechend Fig. 1 ohne Chipkarte.

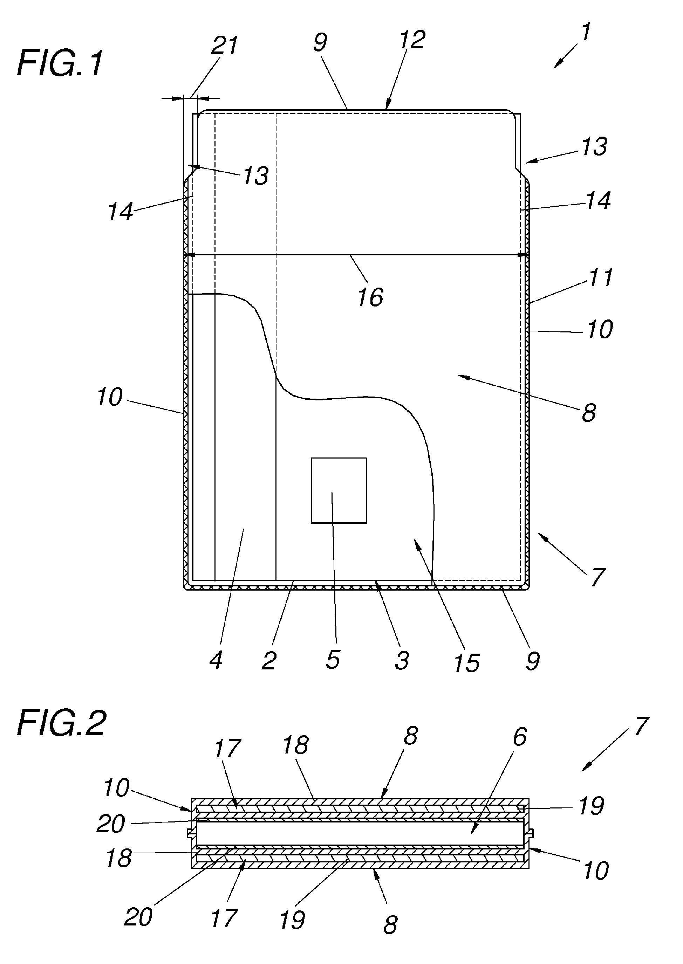

Gemäß Fig. 1 wird beispielsweise eine teilweise aufgerissene Draufsicht auf eine beispielhafte Schutzvorrichtung 1 zur Aufnahme einer Karte 2 gezeigt. Diese kann zum Beispiel eine Chipkarte 3 mit Magnetsteifen 4 und/oder Kontaktfläche 5 sein. Fig. 2 zeigt den zugehörigen Schnitt von Fig. 1 durch die Hülle 7, allerdings ohne Karte 2. Die insbesondere in Fig. 2 ersichtliche Aufnahme 6 für die Karte 2 wird von der Hülle 7 zwischen ihren Breit- 8 und Schmalseiten 9, 10 gebildet. Beim Ausführungsbeispiel sind dazu die beiden Breitseiten 8 über eine Naht 11 randseitig verschweißt, aber auch andere Herstellungsverfahren sind denkbar. Wie in Fig. 1 dargestellt ist eine der kürzeren Schmalseiten 9 als Aufnahmeöffnung 12 für die Karte 2 vorgesehen. Aber auch die Nutzung der Schmalseite 10 als Aufnahmeöffnung 12 für die Karte 2 ist denkbar. Zur Entnahme der Karte 2 sind an gegenüberliegenden Schmalseiten 10 zwei längliche Grifföffnungen 13 zum Greifen der Karte 2 in der Aufnahme 6 eingebracht. Zum zuverlässigen Greifen der Karte 2 bei der Entnahme aus der Hülle 7, liegen sich die beiden Grifföffnungen 13 entlang der Breitseite 8 direkt gegenüber. So ist die Karte 2 beidseitig für die Entnahme greifbar. Da die Grifföffnungen 13 direkt gegenüber liegen, ist das Ergreifen der Karte 2 mit den Fingern einer Hand möglich. Dies erlaubt einerseits eine bessere Kontrolle bei der Führung der Karte 2 und andererseits ist so die zweite Hand zum Halten der Hülle 7 verfügbar. Gegenüber dem Stand der Technik ist bei der erfindungsgemäßen Schutzvorrichtung 1 die Karte 2 für die Entnahme zuverlässig greifbar, ohne den Schutz für die Karte 2 zu vermindern. Zudem ist die Schutzvorrichtung 1 aufgrund der einfachen Gestaltung und der damit verbundenen großen Auswahl verwendbarer Materialen in der Fertigung einfach herstellbar und dementsprechend kostengünstig.

Um die Karte 2 sicher an ihren gegenüberliegenden Kartenschmalseite 14 mit zwei Fingern zu greifen, sind die Schmalseiten 10 der Hülle 7 im Bereich der Grifföffnungen 13 vollständig ausgenommen. Anders als beim Stand der Technik muss nicht mehr gegen die Karte 2 gedrückt werden, um die nötige Reibung zur Bewegung der Karte 2 zu erreichen. Da die Karte 2 bei der Entnahme nur an den Kartenschmalseiten 14 gehalten wird, ist ein Zugang zur Breitseite 15 der Karte 2 über die Grifföffnung 13 nicht notwendig. Daher werden die Breitseiten 15 der Karte 2 durch die Schutzvorrichtung 1 beinahe vollständig abgedeckt, was den Schutz für die Karte 2 weiter verbessert.

Wie aus Fig. 1 ersichtlich, schließen die Grifföffnungen 13 an die Aufnahmeöffnung 12 an. Für die Entnahme wird die Karte 2 im Bereich der Grifföffnungen 13 gegriffen und kann auch während der Entnahme aus der Aufnahme 6 kontinuierlich an der einmal gegriffenen Position gehalten werden. Dies wird konstruktiv einfach erreicht, indem sich die Aufnahmeöffnung 12 in deren Öffnungslänge 16 über die anschließenden Grifföffnungen 13 auf die Länge der, der Aufnahmeöffnung 12 gegenüberliegenden Schmalseite 9 erweitert. Die Schutzvorrichtung 1 erlaubt so ein einfaches Handling der Karte 2, auch während der Entnahme.

Wie insbesondere Fig. 2 entnommen werden kann, weist die Hülle 7 eine vollflächige, elektromagnetische Abschirmung 17 an beiden Breitseiten 8 auf. Eine derart ausgestattete Schutzvorrichtung 1 schützt die aufgenommene Chipkarte 3 auch vor einer NFC bzw. RFID Abfrage sicher. Die externen magnetische Wechselfelder bzw. hochfrequente Radiowellen werden durch die Hülle 7 abgeschirmt und können sich nicht mit der Chipkarte 3 koppeln.

Die in Kunststoff 18 eingebettete elektromagnetische Abschirmung 17 der Hülle 7 besteht im gezeigten Ausführungsbeispiel aus Weißbleche 19. Mithilfe der unterbrechungsfreien Weißblechschicht 19 werden magnetische Sättigungseffekte klein gehalten. Selbst vergleichsweise hohe magnetische Flussdichten statischer Magnetfelder können so zuverlässig abgeschirmt werden. Zudem ist die Schutzvorrichtung 1 aufgrund der Verwendung von Weißblech 19 auch vergleichsweise kostengünstig in der Herstellung.

Die der Aufnahme 6 zugewandten Flächen der Breitseiten 8 der Hülle 7 bestehen aus Hart-PVC 20. Dabei fördert das Hart-PVC 20 das Gleiten zwischen Karte 2 und Hülle 7. So ist die Entnahme beziehungsweise das Einführen der Karte 2 nur mit geringer Reibung verbunden. Dies erlaubt eine weitere Verbesserung der Handhabung der Schutzvorrichtung 1.

Da die Grifföffnungen 13 schlitzförmig ausgebildet sind, können die Grifföffnung 13 besonders klein gehalten werden. Dadurch wird die Karte 2 umfassenden geschützt, da nur geringe Teile der Breitseite 15 der in die Schutzvorrichtung 1 eingesteckten Karte 2 zugänglich sind. Die schlitzförmige Grifföffnungen 13 sind dabei so gestaltet, dass diese entlang dem Verlauf der Schmalseite 10 der Hülle 7 zur Mitte der Hülle 7 hin um die Schlitztiefe 21 zurückspringen. Insbesondere wenn die Schlitztiefe 21 der Grifföffnungen 13 kleiner 1 mm ist, sind nur die Kartenschmalseiten 14 der Karte 2 im Bereich der Grifföffnung 13 zugänglich. Gerade im Bereich des elektromagnetischen Schutzes ist das Abdecken beider Breitseiten 15 der Karte 2 vorteilhaft, da bei manchen RFID Karten 2 die Antenne bis in den Randbereich ragt. Sensible Daten werden mit einer derart geformten Schutzvorrichtung 1 zuverlässig geschützt.

In der Fig. 1 kann zudem erkannt werden, dass in den Grifföffnungen 13 der Hülle 7 die Kartenschmalseiten 14 der Karte 2 freigeben. Dadurch kann ein sicheres Greifen der Karte 2 an deren Kartenschmalseiten 14 ermöglicht werden. Zudem kann gegenüber dem Stand der Technik vermieden werden, dass die Hülle 7 aufgebogen werden muss, um die Karte 2 entnehmen zu können, dies obwohl die Aufnahme 6 die Karte 2 ansonsten vollständig aufnimmt. Dies kann in Fig. 1 daran erkannt werden, dass die beiden gegenüberliegenden Schmalseiten 10 mit den Grifföffnungen 13 zum Überstehen einer in der Aufnahme 6 vorgesehenen Karte 2 an der Schmalseite 9 mit der Aufnahmeöffnung 12 ausgebildet sind.

## Patentansprüche

1. Schutzvorrichtung für eine Karte (2), insbesondere Chipkarte (3), mit einer Aufnahme (6) für die Karte (2), mit einer Hülle (7), die zwischen ihren Breit- (8) und Schmalseiten (9, 10) die Aufnahme (6) für die Karte (2) und an mindestens einer Schmalseite (9) eine Aufnahmeöffnung (12) für die Karte (2) aufweist, und mit mindestens zwei in die Hülle (7) an gegenüberliegenden Schmalseiten (10) eingebrachten Grifföffnungen (13) zum Greifen der Karte (2) der Aufnahme (6), **dadurch gekennzeichnet, dass** sich die beiden Grifföffnungen (13) entlang der Breitseite (8) direkt gegenüber liegen und die Schmalseiten (10) im Bereich der Grifföffnungen (13) vollständig ausgenommen sind.

2. Schutzvorrichtung nach Anspruch 1, **dadurch gekennzeichnet, dass** die Grifföffnungen (13) an die Aufnahmeöffnung (12) anschließen.

3. Schutzvorrichtung nach Anspruch 2, **dadurch gekennzeichnet, dass** sich die Aufnahmeöffnung (12) in deren Öffnungslänge (16) über die anschließenden Grifföffnungen (13) auf die Länge der der Aufnahmeöffnung (12) gegenüberliegenden Schmalseite (9) erweitert.

4. Schutzvorrichtung nach einem der Ansprüche 1 bis 3, **dadurch gekennzeichnet, dass** die Hülle (7) eine, insbesondere vollflächige, elektromagnetische Abschirmung (17) an beiden Breitseiten (8) aufweist.

5. Schutzvorrichtung nach Anspruch 4, **dadurch gekennzeichnet, dass** die Hülle (7) eine in Kunststoff (18) eingebettete elektromagnetische Abschirmung (17), insbesondere Weißblech (19), aufweist.

6. Schutzvorrichtung nach einem der Ansprüche 1 bis 5, **dadurch gekennzeichnet, dass** die der Aufnahme (6) zugewandten Flächen der Breitseiten (8) der Hülle (7) aus Hart-PVC (20) bestehen.

7. Schutzvorrichtung nach einem der Ansprüche 1 bis 6, **dadurch gekennzeichnet, dass** die Grifföffnungen (13) schlitzförmig ausgebildet sind.

8. Schutzvorrichtung nach Anspruch 7, **dadurch gekennzeichnet, dass** die Grifföffnungen (13) gegenüber dem Verlauf der Schmalseite (10) zur Mitte der Hülle (7) hin um die Schlitztiefe (21) zurückspringen.

9. Schutzvorrichtung nach Anspruch 7 oder 8, **dadurch gekennzeichnet, dass** die Schlitztiefe (21) der Grifföffnungen (13) kleiner 1 mm ist.

10. Schutzvorrichtung nach einem der Ansprüche 1 bis 9, **dadurch gekennzeichnet, dass** die beiden gegenüberliegenden Schmalseiten (10) mit den Grifföffnungen (13) zum Überstehen einer in der Aufnahme (6) vorgesehenen Karte (2) an der Schmalseite (9) mit der Aufnahmeöffnung (12) ausgebildet sind.
